# EUROPÄISCHE PATENTSCHRIFT

(11) **EP 2 085 166 B1**
(45) Veröffentlichungstag und Bekanntmachung des Hinweises auf die Patenterteilung: **12.03.2014**
(21) Anmeldenummer: 09450024.6
(22) Anmeldetag: 29.01.2009
(51) Int. Cl.: B23B 23/02, B23B 31/16, B23B 31/40

(54) **Einrichtung zum Axzentrieren von Hohlkörpern**
Submission for centring the axis of hollow bodies
Dispositif de centrage axial de corps creux

(30) Priorität: 30.01.2008 AT 1382008
(43) Veröffentlichungstag der Anmeldung: 05.08.2009
(73) Patentinhaber: Willingshofer GesmbH, 8616 Gasen (AT)
(72) Erfinder: Pöllabauer, Peter, 8616 Gasen (AT)
(74) Vertreter: Wildhack & Jellinek

(56) Entgegenhaltungen:
- WO-A-94/16846
- US-A- 763 568
- US-A- 2 501 684
- US-A- 3 422 709

## Beschreibung

Die Erfindung betrifft eine Einrichtung zum Axzentrieren der Bohrung eines drehbaren Hohlkörpers in einer Drehmaschine, wobei die Einrichtung jeweils dimensionsgleiche Zentrierelemente aufweist, welche In einer Elementehalterung axnormal verschiebbar und radial zueinander positioniert sind, wobei bei Axzentrierung jeweils ein maßgebendes Ende der Zentrierelemente mit einem axial anstellbaren, externen, kreiskegelförmigen Führungsmittel und das gegenüberliegende Stellende mit der Innenfläche der Bohrung des Hohlkörpers in Wirkverbindung gebracht werden können, wobei für ein Spanen von Hohlkörpern mit unterschiedlichem Innendurchmesser jeweils Zentrierelemente mit angepassten Längen einsetzbar sind und die Elementehalterung in Axrichtung durch ein stützmittel positioniert ist

Bei einer genauen Bearbeitung eines Gegenstandes, beispielsweise durch Drehen des Endbereiches eines Hohlkörpers, ist dieser derart sicher aufzuspannen, dass die durch das Werkzeug auf das Werkstück wirkenden Kräfte, beispielsweise Schnittkräfte, keine störende Verbiegung bzw. Versetzung desselben aus der Axzentrizität im Bearbeitungsbereich bewirken. Insbesondere bei einer Bearbeitung der Enden von langen Hohlkörpern mit größerem Durchmesser, wie z.B. ein Drehen der und/oder Schneiden eines Gewindes an Rohrenden, müssen besondere Einrichtungen verwendet werden, um eine Axzentrizität während einer Spanabnahme sicherzustellen.

Bearbeitungsmaschinen, insbesondere Drehbänke, können als Sonder-Einzweckmaschinen, beispielsweise mit einem Spannfutter auf einer Hohlwelle, derart ausgeführt sein, dass ein Vorkragen des zu bearbeitenden Rohrendes gering ist und somit durch den Werkzeugdruck beim Abspanen im Wesentlichen keine Endenverbiegung erfolgt. Nachteilig bei derartigen Bearbeitungseinrichtungen sind die erforderliche Größe bzw. der erforderliche Innendurchmesser von Spannfutter und Hohlwelle sowie gegebenenfalls ein Ausgleich von unterschiedlichen Wandstärken und Axkrümmungen der Werkstückenden.

Ein Aufspannen eines langen Hohlkörpers in einer Bearbeitungseinrichtung kann auch an einer Seite erfolgen, wobei die zu bearbeitende, gegenüberliegende Seite bzw. andere Rohrteile durch Lünette(n) drehgeführt sind, sodass ein Vorkragen des Werkstückendes aus der Führung gering gehalten ist. Allerdings ist dabei erforderlich, die Außenoberfläche des Rohres im Bereich einer Lünettenführung vorher zu bearbeiten.

Es sind auch Aufspann-Zentrierführungen bekannt, die durchaus eine sichere, axgenaue Halterung des Drehteiles sicherstellen können, allerdings ist der Spannaufwand umfangreich und der Platzbedarf hoch.

Aus der US A 2 501 684 ist ein mitlaufendes Zentriermittel für einen Hohlkörper, eingespannt in einer Drehbank, bekannt, wobei in einem Reitstock eine Spindel festgelegt ist, welche einen drehbaren Hülsenkörper trägt. Der Hülsenkörper ist distal zur Festlegung mit einem Flansch gebildet, in welchem axial verschiebbar Zentrierlelemente angeordnet sind. Die Zentrierelemente im Flanschteil sind mit einem konischen Gewinde-Anstellmittel radial verschiebbar, können durch ein Gegenmittel gesichert werden und bewerkstelligen eine Zentrierung eines Rohres.

Eine Abdreheinrichtung für die Endteile von insbesondere genieteten Blechrohren offenbart die US 763 568 A. Diese Rohrbearbeitungseinrichtung umfasst eine Welle, welche einerseits in einem Lager drehbar festgelegt ist, und andererseits einen zentralen Kömersitz für ein einschwenkbares Führungsmittel aufweist. Für ein Aufspannen des Rohres sind auf der Welle zwei positionierbare Zentriereinrichtungen angeordnet. Die Zentriereinrichtungen bestehen jeweils aus einem auf der Welle festlegbaren Kopfteil mit Schiebesitzen und einer Vielzahl von darin radial einstellbaren Zentriermitteln. Zur Anstellung der Zentriermittel dient ein konischer Mutterteil auf einem auf der Welle befestigten Schraubenteil. Der Oberbegriff von Anspruch 1 basiert auf diesem Dokument.

Der Erfindung liegt nun die Aufgabe zugrunde, die gegebenen Nachteile im Stand der Bearbeitungstechnik zu vermeiden und eine Einrichtung zu schaffen, welche auf einfache Weise ein Axzentrieren einer Bohrung in weiten Bereichen des Innendurchmessers eines drehbaren Hohlkörpers mit hoher Stabilität ermöglicht.

Diese Aufgabe wird dadurch gelöst, dass die Einrichtung drei Zentrierelemente aufweist, welche radial mit einem Winkel von 120° zueinander positioniert sind und bei Axzentrierung jeweils die maßgebenden Enden der Zentrierelemente mit einem externen Führungsmittel, welches ein Körner in einem Reitstock einer Drehbank ist, in Wirkverbindung gebracht werden können.

Die mit der erfindungsgemäßen Einrichtung erreichten Vorteile sind im Wesentlichen darin zu sehen, dass bei einem Anstellen des externen, kreiskegelförmigen Führungsmittel 3 bzw. einer axialen Verschiebung des Kömers in einem Reitstock einer Drehbank die radial mit einem Winkel von 120° zueinander gehaltenen Zentrierelemente diese mit axzentrierender Wirkung ein radiales Positionieren des Hohlkörpers bezüglich seiner Innenoberfläche bewirken. Es erfolgt also eine unverschiebbare Axzentrierung der Bohrung, sodass bei einer spanabhebenden Bearbeitung der Außenoberfläche mit Vorteil eine gleiche Wandstärke des Werkstückes in diesem Bereich erstellt wird. Dabei versteht sich, dass die Halterung der Zentrierelemente in Axrichtung durch ein Stützmittel festgelegt ist.

Als externes, kreiskegelförmiges Führungsmittel wird in einer Dreheinrichtung ein Körner, gegebenenfalls ein mitlaufender Körner, in einem Reitstock verwendet werden.

Eine Abstützung in Axrichtung der Elementehalterung kann durch, gegebenenfalls längenverstellbare Endenstützmittel, vom Hohlkörperrand gehaltenen Stützmittel oder im Innenhohl klemmbare Stützmitteln bewerkstelligt sein.

Eine besonders hohe Genauigkeit der Axzentrizität kann erreicht werden, wenn das externe Führungsmittel und die maßgebenden Enden der Zentrierelemente kegelförmig gebildet sind und die Summe der Kegelwinkel des Stellmittels und des maßgebenden Endes der Zentrierelemente gleich oder kleiner ist als 180°.

Wenn mit Vorteil hinsichtlich einer Axausrichtung und einer Abstützung des Hohlkörpers die jeweiligen Stellenden der Zentrierelemente konvex gebildet sind, kann die Genauigkeit und Stabilität der Spannung weiter gesteigert sein.

In günstiger Weise kann vorgesehen sein, dass die Zentrierelemente in der Elementehalterung in Grenzen gegen Endanschläge verschiebbar und gegebenenfalls die Endanschläge durch zusätzlichen Kraftaufwand überwindbar ausgebildet sind. Derart können die Zentrierelemente nicht frei aus der Elementehalterung ausgleiten, was die Spanung eines Rohr- oder Hohlkörpers wesentlich erleichtert.

Es ist allenfalls erforderlich, dass die Elementehalterung in Axrichtung durch ein Stützmittel positioniert ist. Dies kann auf einfache Weise durch einen Flansch an der Elementehalterung und derart durch eine Abstützung an der Stirnseite des Rohres oder durch eine Stellschraube oder dergleichen mit einer Abstützung im Klemmbereich erfolgen. Es ist auch möglich, eine Abstützung mittels eines Klemmteiles, welches durch Haftreibung an der Innenoberfläche des Hohlkörpers festgelegt ist, vorzunehmen.

Für ein Spanen von Hohlkörper mit unterschiedlichem Innendurchmesser können jeweils Zentrierelemente mit in Grenzen angepassten Längen eingesetzt werden, was Vorteile hinsichtlich einer Lagerhaltung betreffend die Einrichtung erbringt.

Im Folgenden wird die Erfindung anhand von lediglich einen Ausführungsweg darstellenden Zeichnungen näher erläutert.

Es zeigen schematisch:
Fig. 1 einen axialen Schnitt durch die Einrichtung in einem Hohlkörper
Fig. 2 einen Schnitt AA senkrecht zur Hohlkörperaxe
Fig. 3 eine Einrichtung mit Abstützung an einer Rohrstimfläche
Fig. 4 eine axiale Einspannung eines Werkzeuges

Um eine Zuordnung von Teilen in den Zeichnungen zu erleichtern, wird nachfolgend eine Bezugszeichenliste bereitgestellt.

### Bezugszeichenliste:

- 1: Hohlkörper
- 11: Bohrung
- 12: Innenfläche der Bohrung
- 13: Stimfläche
- 2: externes Führungsmittel
- 2': Führungsmittel
- 3: Zentrierelemente
- 3': Zentrierelemente
- 31: maßgebendes Ende
- 32: Stellende
- 4: Elementehalterung
- 5: Stützmittel
- 6: Werkzeugträger
- 7: Werkzeug
- 8: Achsteil

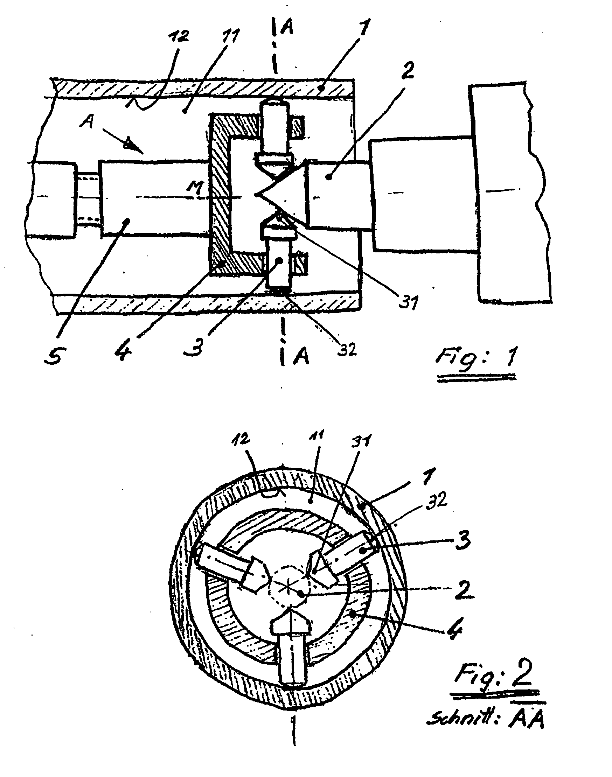

Fig. 1 zeigt eine Einrichtung gemäß der Erfindung in einem Hohlkörper 1. Ein externes Führungsmittel 2, z.B. ein Körner im Reitstock einer Drehmaschine, bestimmt für einen Bereich AA eine Axlage. Zentrierelemente 3 sind in einer Elementehalterung 4 radial, also senkrecht zur Axe, verschiebbar gelagert und haben die gleiche Längserstreckung.

Es sei darauf verwiesen, dass in Fig. 1 der Teil oberhalb der Axe M der Einrichtung der besseren Anschaulichkeit wegen um 60° gedreht dargestellt ist.

Eine Elementehalterung 4 mit drei Zentrierelementen 3, die radial verschiebbar sind, ist durch ein Stützmittel 5 in Axrichtung gehalten. Bei Anstellung eines externen, kreiskegelförmigen Führungsmittels 2 in Axrichtung berührt dieses die maßgebenden Enden 31 der Zentrierelemente 3 und verschiebt diese Elemente 3 radial nach außen bis deren Stellenden 32 an einer Innenoberfläche 12 eines Hohlkörpers 1 anliegen und derart eine Bohrung 11 axzentrieren.

Fig. 2 zeigt einen Schnitt durch eine Einrichtung im Bereich AA, also im Bereich der Zentrierelemente 3, senkrecht zur Axe M. Ein externes Führungsmittel 2 legt einerseits eine Ax-gleiche Position von Zentrierelementen 3 am maßgebenden Ende 31 derselben fest, andererseits stehen die Stellenden 32 in Wirkverbindung mit einer Innenoberfläche 12 einer Bohrung 11 in einem Hohlkörper 1.

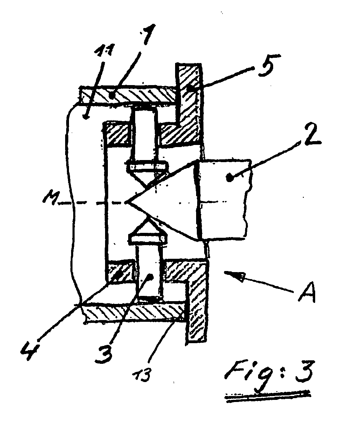

In Fig. 3 ist eine Einrichtung zum Axzentrieren einer Bohrung 11 in einem Hohlkörper 1 dargestellt, wobei eine Elementehalterung 4 für Zentrierelemente 3 mit einem Stützmittel 5 ausgebildet ist, welches an einer Stirnfläche 13 vom Hohlkörper 1 anliegt.

Fig. 4 zeigt eine erfindungsgemäße Axzentriereinrichtung mit einem bewegbaren Messmittel oder Werkzeug 7. In einem Hohlkörper 1 erstreckt sich ein Achsteil 8. Eine rohrförmige Elementehalterung 4 weist in beiden Endenbereichen der Längserstreckung jeweils hohle für Zentrierelemente 3 auf. Am Achsteil 8 sind einerseits positionsgesichert, andererseits anstellbar, Führungsmittel 2, 2' positioniert, welche mit jeweils endenseitig angeordneten Zentrierelementen 3, 3' zusammenwirken. Eine Anstellung eines Führungsmittels 2, beispielsweise durch ein Schraubteil 51, stellt eine zentrierbunde Wirkverbindung der Zentrierelemente 3, 3' zwischen Achsteil 8 und Innenoberfläche 12 einer Bohrung 11 vom Hohlkörper 1 her. Ein Werkzeugträger 6 mit Werkzeug 7 ist beispielsweise drehbar am Achsteil 8 befestigt.

## Patentansprüche

1. Einrichtung zum Axzentrieren der Bohrung eines drehbaren Hohlkörpers (1) in einer Drehmaschine, wobei die Einrichtung (A) jeweils dimensionsgleiche Zentrierelemente (3) aufweist, welche in einer Elementehalterung (4) axnormal verschiebbar und radial zueinander positioniert sind, wobei bei Axzentrierung jeweils ein maßgebendes Ende der Zentrierelemente mit einem axial anstellbaren, externen, kreiskegelförmigen Führungsmittel und das gegenüberliegende Stellende mit der Innenfläche (12) der Bohrung (11) des Hohlkörpers (1) in Wirkverbindung gebracht werden können, wobei für ein Spanen von Hohlkörpern mit unterschiedlichem Innendurchmesser jeweils Zentrierelemente mit angepassten Längen einsetzbar sind und die Elementehalterung (4) in Axrichtung durch ein Stützmittel (5) positioniert ist, **dadurch gekennzeichnet, dass** die Einrichtung (A) drei Zentrierelemente (3) aufweist, welche radial mit einem Winkel von 120° zueinander positioniert sind und bei Axzentrierung jeweils die maßgebenden Enden (31) der Zentrierelemente (3) mit einem externen Führungsmittel (2), welches ein Körner in einem Reitstock einer Drehbank ist, in Wirkverbindung gebracht werden können.

2. Einrichtung nach Anspruch 1, **dadurch gekennzeichnet, dass** *der Körner (2) im Reitstock* und die maßgebenden Enden (31) des Zentrierelements (3) kegelförmig gebildet sind und die Summe der Kegelwinkel des Führungsmittels (2) und des maßgebenden Endes (31) der Zentrierelemente (3) gleich oder kleiner ist als 180°.

3. Einrichtung nach einem der Ansprüche 1 oder 2, **dadurch gekennzeichnet, dass** die jeweiligen Stellenden (32) der Zentrierelemente (3) konvex gebildet sind.

4. Einrichtung nach einem der Ansprüche 1 bis 3, **dadurch gekennzeichnet, dass** die Zentrierelemente (3) in der Elementehalterung (4) in Grenzen gegen Endanschläge verschiebbar und gegebenenfalls die Endanschläge durch zusätzlichen Kraftaufwand überwindbar ausgebildet sind.

## Claims

1. A device for centering the axis of the bore of a rotatable hollow body (1) in a lathe, wherein the device (A) has centering elements (3) each having the same dimensions, which are slidable within an element holder (4) in a direction normal to the axis and positioned in a radial relation to one another, wherein, upon centering the axis, one substantial end of the centering elements can be brought into active contact with an axially adjustable, external guiding meanshaving a circular-conical shape and the opposite adjustment end can be brought into active contactwith the interior surface (12) of the bore (11) of the hollow body (1), wherein, for machining hollow bodies having different interior diameters, centering elements each having adjusted lengths can be employed and the element holder (4) is positioned in axial direction by a supporting means (5), **characterized in that** the device (A) has three centering elements (3), which are radially positioned at an angle of 120° towards one another, and **in that**, upon centering the axis, the substantial ends (31) of the centering elements (3) can be brought into active contact with an external guiding means (2), which is a center punch in a headstock of a lathe.

2. The device of Claim 1, **characterized in that** the center punch (2) in the headstock and the substantial ends (31) of the centering elements (3) are conically formed and **in that** the sum of the angles of taper of the guiding means (2) and of the substantial end (31) of the centering elements (3) is the same of or less than 180°.

3. The device of any one of Claims 1 and 2, **characterized in that** the adjustment ends (32) of the centering elements (3) are convexly formed.

4. The device of any of Claims 1 to 3, **characterized in that** the centering elements (3) in the element holder (4) are slidable within limits towards end stops and **in that** the end stops are optionally formed so as to be surmountable by applying additional strain.

## Revendications

1. Dispositif pour centrer axialement l'alésage d'un corps (1) creux pivotable dans un tour, le dispositif (A) comportant des éléments (3) de centrage respectivement des mêmes dimensions, glissablesperpendiculairement à l'axe dans un support (4) pour éléments et disposés radialement les par rapport aux autres, dans le centrage axiale respectivement une extrémité substantielledes éléments de centrage pouvant être fonctionnellement reliée avec un moyen de guidage applicable axialement, extérieur, en forme de cône circulaire, et l'extrémité de fonctionnement opposée pouvant être fonctionnellement reliée avec la face (12) interne de l'alésage (11) du corps (1) creux, des éléments de centrage avec des longueurs ajustables pouvant être utilisés afin d'usiner des corps creux présentant des diamètres différents et le support (4) pour éléments étant positionné en direction axiale par un moyen (5) de support, **caractérisé en ce que** le dispositif (A) comporte trois éléments (3) de centrage, étant positionnées sous un angle de 120° les uns par rapport aux autres et les extrémités substantielles (31) des éléments (3) de centrage pouvant être fonctionnellement reliées respectivement dans le centrage axiale par un moyen (2) de guidage extérieur étant un pointeau dans une contre-poupée d'un tour.

2. Dispositif selon la revendication 1, **caractérisé en ce que** le pointeau (2) dans la contre-poupée et les extrémités (31) substantielles de l'élément (3) de centrage présentent une forme de cône, et **en ce que** la somme des angles de cône du moyen (2) de guidage et de l'extrémité (31) substantielle des éléments (3) est égale ou moins que 180°.

3. Dispositif selon une des revendications 1 ou 2, **caractérisé en ce que** les extrémités (32) d'actionnement des éléments (3) de centrage présentent une forme convexe.

4. Dispositif selon une des revendications 1 à 2, **caractérisé en ce que** les éléments (3) de centrage peuvent être glissés dans le support (4) pour éléments de façon limitée contre les arrêts et que les arrêts peuvent éventuellement être surmontés en appliquant plus de force.
